Europäisches Patentamt

**(19)** European Patent Office

Office européen des brevets

**(11)** Publication number: **0 048 559**
**A2**

**(12)** # EUROPEAN PATENT APPLICATION

**(21)** Application number: **81304023.5**

**(22)** Date of filing: **02.09.81**

**(51)** Int. Cl.³: **B 32 B 3/22**
F 28 F 3/00, F 28 F 9/00
H 01 M 2/18, H 01 M 6/02
B 32 B 31/10, H 01 M 6/34

**(30)** Priority: **24.09.80 US 190191**

**(43)** Date of publication of application:
**31.03.82 Bulletin 82/13**

**(84)** Designated Contracting States:
**DE FR GB**

**(71)** Applicant: **GENERAL ELECTRIC COMPANY**
**1 River Road**
**Schenectady New York 12305(US)**

**(72)** Inventor: **Collins, Robert Mary**
**Fairview Street**
**Lee Massachusetts 01238(US)**

**(72)** Inventor: **Dmytryshyn, Donald John**
**10 Caroline Street**
**Pittsfield Massachusetts 01201(US)**

**(72)** Inventor: **Shipp, Gary Wayne**
**192 Doreen Street**
**Pittsfield Massachusetts 01201(US)**

**(74)** Representative: **Wood, Anthony Charles et al,**
**c·o MICHAEL BURNSIDE & PARTNERS 2 Serjeants' Inn**
**Fleet Street**
**London EC4Y 1HL(GB)**

**(54)** Pile structure and method of making same.

**(57)** Pile structure for use in batteries, particularly seawater batteries. The pile structure comprises one or more plates (2) which are separated by separator plugs (3) which extend via through-holes (5) from surface to surface of each plate. The separator plugs (3) are formed to integral spacer heads (33) beyond one surface of each plate. A continuous or intermittent band (30) is formed around the edge of each plate, and is provided with projections (36) which extend beyond that one surface of each plate, coextensively with the spacer heads. The separator plugs (33) and bands (30) may be formed by injection moulding process. The openings between the projections (36) permit passage of seawater.

Another application for the pile structure is as a heat exchanger.

Fig. 1.

-1-

PILE STRUCTURE AND METHOD OF MAKING  SAME

BACKGROUND OF THE INVENTION

Field of the Invention

This invention pertains to pile structure and methods of fabricating pile structures and, particularly, to such structures which could be used for, among other things, electrolytic cells, batteries, and heat exchangers. The structure and method of making that structure is pertinent to primary batteries and other forms of electrolytic cells which require a uniform spacing of a stack of plates, each made of one or more layers of electrically-conducting materials wherein it is advantageous for the spacing of the plates to be accomplished by the use of a dielectric material. Although the invention is most pertinent to pile structures wherein the stacked plates are metals, the structure and method of fabrication is applicable to structures made of other materials as, for example, ceramics, glass and other manufactured materials.

The invention is particularly pertinent to battery structures wherein either the plates are alternately anodes and cathodes or structures or each plate is made up of both anode and cathode material which is laminated or otherwise attached to each other to form a cell structure. One particular example of application of the invention would be in seawater batteries or other batteries using a circulating electrolyte wherein the plates in the pile must be held in uniformly spaced relationship by a dielectric structure so as to obtain unobstructed electrolyte flow and an efficient uniformity of action.

Background Art

The U.S. Patents to Campbell 2,774,102 and Van Billiard et al 3,012,087 represent background art in the field of seawater batteries. Van Billiard discloses a seawater battery having electrolytic cells of magnesium and silver chloride, using seawater as an electrolyte, wherein the battery pile structure, as shown in Figure 2 of that patent, is made up of a series of plates, each having a sheet of magnesium and a layer of silver chloride attached to opposite sides of a sheet of silver foil. Contiguous plates are spaced apart by means of glass beads embedded into the sheets of silver chloride to permit free electrolyte flow. The Campbell patent discloses a method and apparatus for the setting of glass beads into a ductile sheet of material and describes the apparatus used to produce a plate for use in a battery of the type disclosed by Van Billiard. The Campbell method and apparatus has also been used on battery pile structures wherein the cell plates are laminations of aluminum, silver foil and silver oxide.

Glass bead spacer systems have been found to have shortcomings in that there is a tendency for beads to wash out, either because not sufficiently well planted or as a result of erosion of the metal around the bead, thereby not being available to fulfill their purpose and being free to flow through the electrolyte distribution system and interfere with electrolyte flow as, for example, by clogging constricted passageways. In addition, the bead setting method obviously relies on, and is limited to use by, the ductility of material used for the plate.

Other separator substances used in the battery art have included epoxy beads or droplets of an epoxy merely stuck on a face of the plate. Nylon filaments and batting material have also been used as spacers. The epoxy beads and nylon filament produce problems of detached separators which jeopardize the spacing between plates and provide a source of contaminant material in the flowing electrolyte which can interfere with electrolyte management, possibly even to a greater degree than experienced with implanted glass beads. Batting material impedes or precludes electrolyte circulation.

U.S. Patent 4,194,961 recently issued to R.E. Williams represents a more up-to-date prior art approach in that it discloses the use of integral one piece, dielectric spacer elements having two heads and an interconnecting shank portion for spacing apart the electrodes in an electrolytic cell. The shank portions of the prefabricated dumbbell-like elements are slipped into slots open to the edge of the electrode plates and prevented from escaping by upset portions of the edges of the slots after insertion.

U.S. Patent 4,194,061, Land et al, and U.S. Patent 4,168,349, Buzzelli, disclose other arrangements of electrolyte management and plate spacers.

Additional information is available in Chapter 7 "Water-Activated Batteries" by D.J. Doan in Volume II of "The Primary Battery", Cahoon and Heise, Editors, The Electrochemical Society, Inc., New York, Copyright 1976, John Wiley and Sons, Inc.

0048559

-4-

## SUMMARY OF THE INVENTION

This invention is directed to a pile struc - ture of uniformly spaced plates which includes spacer elements establishing and maintaining the desired spacing between adjacent plates and the method of making the plates and the pile structure. Briefly, plates made of single, multilayered or laminated materials are provided with through plugs having mushroom-like heads protruding from one side of the plate for a distance equal to the desired spacing between adjacent plates and with a border material extending along at least part of the edges of the plate which also protrudes from the plate surface a distance calculated to cooperate with the border on the adjacent plate to maintain the desired interval between plates as determined by the protruding heads of the plugs. Plates are then stacked and joined as, for example, by having contiguous border materials banded together or shaped so as to provide a mechanical interlock. The material from which the plates are made is selected in each instance according to parameters or characteristics most appropriate to the use to which the resulting pile structure is to be applied. The plates can be planer or curved providing, of course, that plate shape and spacer plugs are designed, shaped and sized to cooperate with each other to provide the desired pile structure. Anode and cathode materials would be used to form the plates for a battery pile structure. A metal having low thermal resistance would be used for plates if the resulting pile structure were to be used as a heat exchanger. The spacing between adjacent plates also depends on the ultimate end use. The spacer plugs which, in a preferred embodiment, resemble two-headed rivets having one head countersunk into the plate on one side to lock the plug in place and the other head protruding from the plate to provide the spacer distance are inserted by the injection molding of a thermoplastic into holes in the plates.

The method of forming the pile structure briefly contemplates (1) fabrication of the plates with a stepped perimeter, (2) providing holes in each plate to define the location of the spacer plugs, (3) placing each plate in an injection molding machine with a die plate designed to shape a spacer head on the spacer plugs and a border of the thermoplastic material encompassing the desired part of the perimeter of the plate, (4) injecting a suitable thermoplastic, (5) removing the plate from the molding machine, (6) stacking the plates in a desired fashion, and (7) joining the plates together.

BRIEF DESCRIPTION OF THE DRAWINGS

FIGURE 1 is an illustration in perspective of a pile structure according to the invention with a portion cut away to show details of construction.

FIGURE 2 is a detailed view of the cutaway portion of the pile shown in FIGURE 1.

FIGURE 3 is an illustration of a cross section of a portion of a plate made of homogeneous material showing one spacer plug in elevation, one spacer plug in cross section, border material and a hole in the plate which does
not include a spacer plug.

FIGURE 4 is an illustration of a cross section of
a portion of a plate of laminated materials, also showing
spacer plugs and edge material similar to FIGURE 3.

FIGURE 5 is an enlargement of a cross section of a
spacer plug and the surrounding portion of a single material
plate.

FIGURE 6 is a cross section of a part of injection
molding dies suitable for injection molding spacer plugs
into a plate such as that of FIGURE 3 and showing in
phantom how a plate would be placed for injection molding
of the spacer plugs.

## DETAILED DESCRIPTION

### In General

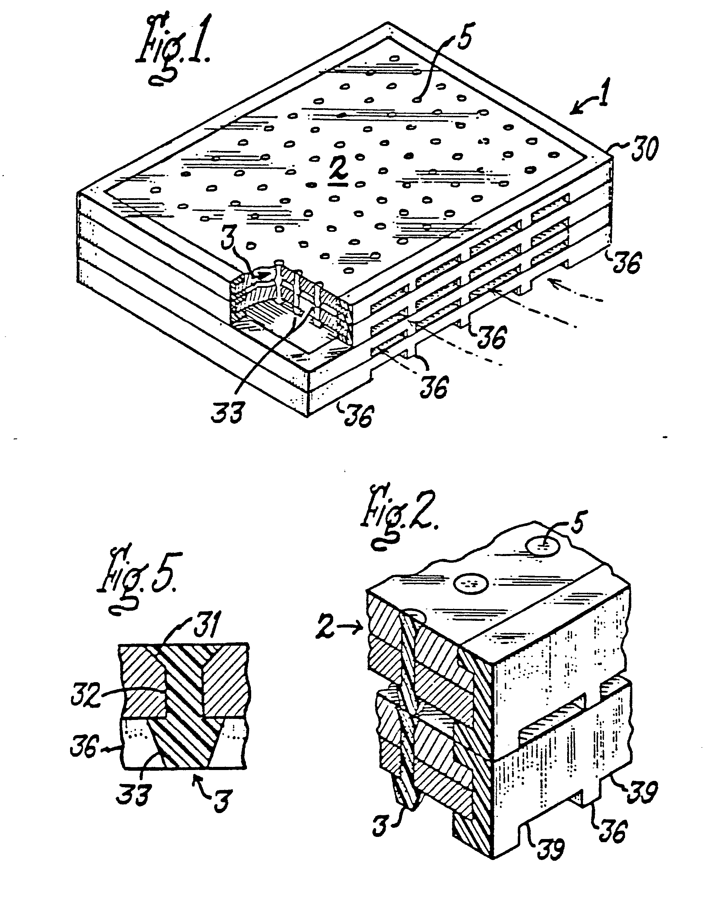

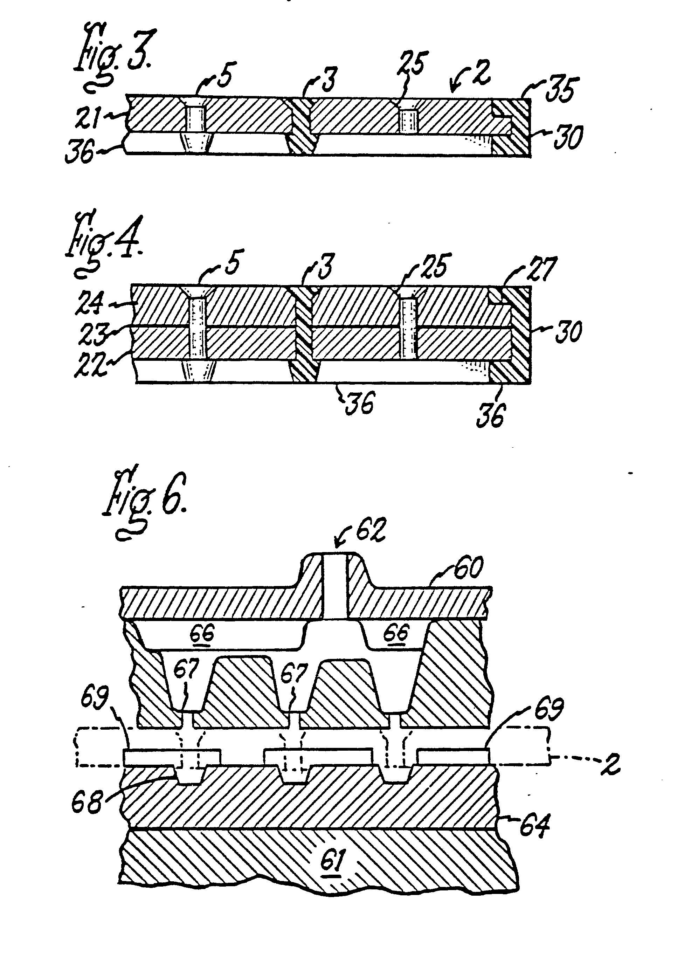

This invention pertains to pile structures and,
particularly, a pile structure which features spacing of adjacent
plates in the pile structure, and to a method of making the
plates and the pile structure. Structures of this type
can be used in widely diverse arts but has particular
beneficial application to electrolytic batteries and heat
exchangers. The invention will be explained primarily
in the context of a pile structure for use in a seawater
battery which, as illustrated in FIGURE 1, contains a
series of plates stacked and joined with a uniform predetermined separation with entrances and exits for a
fluid medium to be passed through the spaces between the
plates. For use as a cell core for an electrolytic battery, the plates would be made of the proper voltaic materials and have the proper electrical circuit connections. The plates could be alternately anodes and cathodes or each plate could be a combined or laminar cell plate containing both anode and cathode materials as, for example, those often used in seawater batteries in connection with ducting or a surrounding space to channel and control electrolyte which is passed between the plates. Details of the construction, as illustrated in FIGURES 2, 3, 4 and 5, will be discussed below. The structure made of the proper materials and having the appropriate connections could also be used as a heat exchanger to either accept heat from, or release heat to, an ambient fluid.

The method of making the pile structure of FIGURE 1 includes the steps of fabricating a plate of the desired materials, size and shape; making holes in the plate in a desired pattern as, for example, that shown on the top surface of the pile of FIGURE 1; placing each plate in an injection molding machine and injection molding onto the plate the thermoplastic spacer plugs and perimeter band illustrated in FIGURES 3 and 4; and joining the fabricated plates together in a stack, as shown in FIGURE 1.

A Preferred Embodiment

As already noted, a pile structure according to this invention has utility in the construction of electrolytic batteries, both primary and storage batteries, with one prime example being seawater or other water-activated or reserve batteries, e.g., high energy, low weight batteries usually intended for a single use and maintained in a dry condition until filled with ambient seawater as an electrolyte. These batteries are most often used to power buoys, torpedos and auxiliary equipment used in an ocean environment but can also be used as "dunk" batteries for other uses, e.g., weather balloons. Irrespective of anode and cathode materials, a seawater battery is often made with laminar cells made up of a plate which is a lamination of a sheet of the anode material and a sheet of the cathode material separated by an electrically conducting sheet which does not, at least initially, become involved in the electrolytic process. Cell plates are stacked in a continuous series relationship in a battery chamber with some means of separation being provided between adjacent plates to accommodate the presence or passage of electrolyte, as noted above with respect to the background art.

The pile structure 1 illustrated in FIGURES 1 and 2 is made up of a series of plates which are secured together. The plates 2, as illustrated in FIGURES 3 and 4, can be, depending on the purpose, made up of a single monolithic sheet of material 21, as shown in FIGURE 3, or of a layered or laminated structure, as shown in FIGURE 4, comprised of a plurality of sheets of material as, for example, the sheets 22, 23, 24 illustrated in FIGURE 4. In the example of a multilayered plate which is to be used in a water-activated primary battery of the aluminum/silver oxide type, sheet 22 would be aluminum on which a layer 23 of silver has been plated or deposited and sheet 24 would be silver oxide. One of several ways to apply the silver oxide is by use of a prepared sheet of silver oxide on silver foil which is then laid on layer 23 in the assembly process. The plates 2 in either the single or layered form are provided with holes 5 which preferably have a tapered portion 25 at one face of the plate. The materials of sheets 22 and 24 could be reversed but it has been found efficacious to put the tapered portion 25 of holes 5 in the silver oxide and the spacer head on the aluminum side so that the overlap of the spacer heads over the aluminum will protect the shoulders of holes 5 from electrolytic erosion during battery operation to maximize the time during which the spacer plugs perform the missions of securing the layered plates together and of providing spacing. This detail, of course, would not be as important with respect to rechargeable storage batteries which would not be run to exhaustion prior to recharging and would have little or no significance outside the battery art. It is also practical to shape the perimeter of the plate to form a step to facilitate fabrication of the perimeter band, as indicated at 27 in FIGURE 4. A functional structure can also be accomplished by making sheet 24 slightly smaller than sheets 22 and 23. In the example of a magnesium/silver chloride seawater primary battery, it would also be preferable to make the sheet 22 of magnesium, 23 of silver foil, and 24 of silver chloride as the magnesium is more subject to electrolytic erosion.

The plates 2 in either case are spaced apart from each other by means of plate separators 3. The separators 3, as shown in detail in FIGURE 5, constitute plugs in holes 5 preferably having tapered head portions 31 which are practical for a countersunk position, body portions 32 and enlarged spacer portions 33 which resemble mushroom-shaped hammered rivet heads having portions which exceed the diameter of the body portions, and, therefore, overlap a portion of the plate adjoining the holes 5. In the case of a layered plate structure which is not permanently bonded or laminated, the spacer heads 33 also serve in cooperation with the tapered heads 31 to secure the layers of the plate together. Spacing between the plates depends on the depth of the spacer heads 33. The plates are also made with a perimeter band or border structure 30 which preferably has one surface 35 aligned with the exterior face of the plate on the side having the counter-sunk heads 31 of the separators 3 and a surface with projections 36 which extends beyond the surface of the plate on the other side commensurate with the spacer portions 33 of the plugs 3. This structure provides a further spacer device to assist in determining and maintaining a selected distance between adjacent plates in a pile structure of plates which are stacked with the spacer portions of the plugs and the spacer portions of the border material of each plate resting against the smooth surface of the adjacent plate. Although it is preferable to have all the spacer projections on one side of the plate and the other side smooth to simplify plate molding and to prevent erroneous stacking during pile assembly, use of spacer projections on both sides in some applications might be beneficial as, for example, to obtain greater distances between plates. As a variation, it is also possible, and may, depending on the plate technique used, actually facilitate molding, for the plug spacer heads to project from one side of a plate but for the perimeter spacers to project from both faces of the plate with the notation that the two spacers in such case would add up to the thickness of the spacer head. The edge bands 30 may be continuous or intermittent around the plate perimeters or may be continuous with cutaway portions as at 39 in the FIGURES to define passageways for fluid, depending on the intended application of the pile structure.

The separator plugs 3 and the border material 30 can be made of any practical material, i.e., a dielectric material in the case of an electrolytic battery, but a metal or other heat-conducting substance would be satisfactory or even preferable in the case of a pile structure intended for use as a heat exchanger. In the case of a battery having multilayered plates, such as the aluminum/silver oxide battery referred to above, or a lead acid battery having monolithic plates, a dielectric would be required and a thermoplastic is most practical to use in view of the preferred method of constructing a pile structure according to this invention. A thermoplastic that has been used successfully for the purpose is a polyester resin as, for example, a high molecular weight, linear poly(aklylene terephthalate) which, when molded by an injection molding process, produces a product having a clean smooth surface with little tendency for sticking in a mold. One specific substance that has been used successfully is a polyester resin sold for injection molding purposes in pellet form by the General Electric Company under the trademark "Valox" and particularly Valox type 325, which was chosen for its molding and remold repeatability characteristics. Other like or similar materials may be used to obtain specific separator properties, e.g., chemical resistance, heat expansion, strength, etc. It is also possible, but more expensive if required, to use a different material for the band than for the plugs.

## The Method

The method of making a pile structure of uniformly spaced plates constituting a portion of this invention constitutes the steps of (1) fabricating a plate which may be made of homogeneous material or may be an assemblage or lamination of two or more layers of material, (2) providing holes in each plate to be used for locating and securing spacer plugs and shaping the edge of each plate to accommodate the desired edge band, (3) placing each plate in an injection molding machine with die plates designed to create a plug in each hole in the plate with an enlarged head extending from at least one face of the plate and to mold a band around the perimeter of the plate having a portion which protrudes from the plate commensurate with the enlarged heads, (4) injecting a thermoplastic to form the plugs and perimeter bands, (5) removing the plate from the molding machine, (6) stacking the plates in mating fashion, and (7) joining adjacent plates into a pile by securing the plates together.

The method of fabrication of the individual plates is not a limitation on the contemplated method of making the pile structure as the plates can be fabricated using any number of techniques. The insertion of the holes can be accomplished in several ways, by drilling the holes and drilling the enlarged portions 25 of the holes, either separately or with a shaped drill which provides holes and tapered portions simultaneously, or by punching the hole and enlarged portion 25 as one or two steps, or even by punching the holes and drilling the tapered portions. Any of these processes can be accomplished by hand or by automated numerically controlled single or multiple tool machine tools. The stepped plate perimeter can be obtained by casting or machining, and in some instances by having the outer layer of a multilayered plate cut smaller than the other layers. FIGURE 6 is a partial cross section of die plates which might be used in an injection molding machine for the injection molding of the spacer plugs in the holes and the edge border on the plates showing the location of a plate 2 for the pile structure during the injection process in dotted lines. Outer plates 60 and 61 represent the pressure plates of the injection molding machine with upper plate 60 including a feed conduit 62 for the material to be injected. Upper and lower die plates 63 and 64 which are held in proper position as is common in the art of injection molding serve to mold the plastic in place and, in the case of the upper plate 63, to channel the thermoplastic material from conduit 62 between guide ribs 66 to the injection nozzles 67 which mate with the holes 5

-14-

in a pile plate 2 held between the die plates. Plate 64 is provided with spacer head molds 68 and is also provided with a female mold for a major portion of the edge band (not shown) and with projections 69 which create the voids 39 in the bands which provide entrance and exit conduits for the fluid medium used. Spacer heads can be molded on both sides of a plate by providing an enlargement of nozzles 67 in plate 63 to form female molds of spacer heads. The thermoplastic flows through the nozzles 67 to fill holes 5 in the pile structure plate located between the die plates and also the edge band and the spacer molds in the lower die plate 64. After complete injection, the pile plate is removed with the spacer heads and the edge band attached and with any thermoplastic adhering to the centers of the top of spacer plugs which may have pulled away from the material in the nozzles removed to make a clean surface on one side of the pile plate. The plates are then stacked in uniform orientation as shown in FIGURE 1 and joined together. One way of securing plates is by application of adhesive or bonding material to the touching portions of adjacent edge bands so as to bond the plates into a pile structure. Other methods of securing the plates together could be used but in view of the use of a thermoplastic material, bonding seems to be preferable.

## Other Uses

Although the invention has been explained principally in the context of primary seawater battery cell structures, the pile structure and the method of making that pile structure as disclosed and claimed finds additional utility, not only in other types of battery structures and heat exchangers as already mentioned but in still other applications. One additional utility might be in insulating or protective structures including, for example, armor plate or insulated window units where the insulation depends on entrapped air or other gases and particularly where transparent plates may be made from substances such as transparent polycarbonates in lieu of, or in addition to, glass. There also may be applications in which it may be advantageous to mold spacer heads onto both sides of a plate as, for example, in an insulated window structure in which exterior plates are glass with interior or alternate plates made of a transparent polycarbonate having spacer heads on both faces of the polycarbonate sheet. This configuration would facilitate construction of such a pile since the polycarbonate is more amenable than glass to being perforated to form holes into which spacer plugs would be molded. In some of these uses, of course, a clear or transparent moldable plastic would be preferable for the spacer plugs. Another variant which could be utilized without departing from the concept of the invention is the use of curved or shaped pile plates which could be of any of many forms including plates of coordinated cylindrical segments which could be assembled to form spaced cylindrical shells which might find utility in heat exchanger construction for the transfer of heat from one fluid medium to another.

-16-

CLAIMS

1. A pile structure comprising one or more plates (2) c h a r a c t e r i z e d by separator plugs (3) extending through each said plate (2) from surface to surface, said plugs continuing beyond one surface of each plate to terminate in uniform integral spacer heads (3), and a continuous or intermittent band (30) enclosing the edge of each said plate said band (30) and having projections (36) extending beyond the said one surface of the plate, coextensively with said spacer heads (33), whereby said spacer heads (33) and said projections (36) would determine the spacing between each said plate (2) and another contiguous object.

2. A pile structure according to Claim 1 wherein:
each said plate (2) is formed with discrete and separated holes (5) extending through said plate from surface to surface thereof,
said separator plugs (3) are made of a plastic substance that is molded into said holes (5), and
said band (30) is made of plastic substance which is molded onto the edge of each said plate (2).

3. A pile structure according to Claim 1 or 2 wherein said separator plugs have spacer heads on both ends.

-17-

4. A pile structure according to Claim 2 wherein: said separator plugs (3) each have a retainer head (31) on the end remote from said spacer head (33), said retainer heads being countersunk into said plate, with all spacer heads in each plate extending from the same surface of that plate; said one or more plates (2) have perimeter areas of reduced thickness on to which said bands (30) are molded; and each said band at such plate areas of reduced thickness has an exterior surface flush with the surface of the plate on the side of the plate having the said plug retainer heads.

5. A pile structure according to Claim 4 wherein said one or more plates are made of a substance having low thermal resistivity whereby said structure has utility as a heat exchanger.

6. A pile structure according to Claim 4 wherein: said one or more plates are made of a voltaic substance; and said plugs and band are made of a dielectric which is resistant to ionization and galvanic action.

7. A pile structure according to Claim 4 wherein: said one ore more plates each include two or more laminae (22,23,24) of different voltaic substances which cooperate in the presence of an electrolyte to create a voltaic cell; and said plugs (3) with said retainer heads (31) and said spacer heads (33) at least in part secure said two or more laminae of each said one or more plates together to form each said plate.

-18-

8. A pile structure according to Claim 7 wherein:

there are a plurality of uniformly spaced plates; and

said plurality of plates (2) are stacked parallel to one another in surface of surface relationship and oriented with said spacer heads (33) of said plugs (3) in a common direction so that each interval between plates is determined by a single set of spacer heads and said projections (36) on said bands (30).

9. A pile structure according to Claim 8 wherein said plurality of plates are joined together into a pile by adhesion between said bands to form a primary battery.

10. A method of producing a pile structure having a series of uniformly spaced plates comprising the steps of preparing a number of individual plates, c h a r a c t e r i z e d by placing a number of holes (15) through each of said plates from surface to surface according to a predetermined pattern; and injection molding plastic separator plugs (3) into said holes in each plate, said plugs having spacer heads (33) of predetermined size and shape protruding from one face of each plate.

11. A method according to Claim 10 further comprising the additional steps of:

stacking said number of plates in surface to surface relationship separated by said spacer heads to form a pile; and

securing said plates together in their stacked relationship.

12. A method according to Claim 11 further comprising the additional step of injection molding a plastic band (30) around at least a substantial part of the peripheral edge of each plate.

13. A method according to Claim 11 wherein the step of injection molding plastic separator plugs in the holes in each plate also includes the simultaneous injection molding of a plastic band (30) around at least a substantial part of the peripheral edge of each said plate.

14. A method according to Claim 13 wherein the step of placing a number of holes includes the shaping of said holes (5) to enlarge the holes at the face of each plate remote from said one face to cause said plugs to be molded with countersunk retainer heads (31) on the end of said plugs opposite said spacer heads (33).

15. A method according to Claim 14 wherein the step of preparing said plates includes the creation of an area of reduced thickness along the peripheral edge of said plates onto which the said plastic bands (30) will be molded.

Fig.1.

Fig.5.

Fig.2.

Fig. 3.

Fig. 4.

Fig. 6.